# EUROPEAN PATENT APPLICATION

(11) **EP 3 440 968 A1**
(43) Date of publication of application: **13.02.2019**
(21) Application number: 17185589.3
(22) Date of filing: 09.08.2017
(51) Int. Cl.: A47J 31/44, B65D 47/30

(54) **LIQUID CONTAINER CONFIGURED FOR USE WITH A LIQUID FROTHING DEVICE INCLUDING A LIQUID SUCTION CONDUIT**

(71) Applicant: Koninklijke Philips N.V., 5656 AE Eindhoven (NL)
(72) Inventor: CASTELLI, Cristiano, 5656 AE Eindhoven (NL); CAMPANA, Alex, 5656 AE Eindhoven (NL)
(74) Representative: de Haan, Poul Erik

(57) **Abstract**

A liquid container configured for use with a liquid frothing device including a liquid suction conduit (101) is provided. The liquid container comprises a container housing (10) having an inlet (13), and further comprises a closure arrangement (20) located in the inlet (13), comprising a seat (21) that is arranged in the inlet (13) and a closure body (22) that is arranged in the seat (21), wherein both the seat (21) and the closure body (22) have a through hole (23, 24) for allowing a liquid suction conduit (101) to pass through. The closure body (22) is movable in the seat (21) between at least an opened position in which the respective through holes (23, 24) are aligned with each other, and a closed position in which the closure body (22) blocks the through hole (23) of the seat (21).

## Description

### FIELD OF THE INVENTION

The invention relates to a liquid container configured for use with a liquid frothing device including a liquid suction conduit, the liquid container comprising: a container housing having an inlet for allowing insertion of the liquid suction conduit in the container housing, and a closure arrangement associated with the inlet.

The invention also relates to a liquid frothing set, comprising: a liquid frothing device including a liquid suction conduit, and a liquid container as specified in the preceding paragraph.

### BACKGROUND OF THE INVENTION

A well-known example of a liquid frothing device is a milk frother. The background of the invention will now be explained in the context of frothing milk, which should not be understood so as to imply that the invention is limited to such a context. The fact is that all aspects of the invention are equally applicable in the context of frothing other liquids.

A milk frother may be provided as a standalone device or as a part of a larger device such as a coffee maker. In either case, for the purpose of supplying milk to the milk frother during operation, the milk frother includes a liquid suction conduit for sucking milk from a source of milk. Such a liquid suction conduit is usually provided in the form of a tube or a pipe, and may be at least partially flexible. The source of milk may be a milk carton or the like, but it is also known to have a set of a milk frother and a liquid container, in which case the liquid container serves for receiving and containing milk to be used in a frothing process. The invention particularly relates to the configuration of a liquid container as mentioned.

In practical cases, such a liquid container comprises a container housing having an inlet for allowing insertion of the liquid suction conduit in the container housing. A closure arrangement may be provided, to close the inlet when no milk needs to be sucked from the liquid container. The closure arrangement may be a cap or the like that can be put in a position for covering the inlet. The cap may be provided as a separate part or a part that is movably arranged on the liquid container. For example, the cap may be hingeably arranged on the liquid container or may be arranged on the container so as to be rotatable or slideable between a position for closing the inlet and a position for allowing access to the inlet.

### SUMMARY OF THE INVENTION

It is an object of the invention to provide a closure arrangement that is effective in both closing an inlet in a container housing of a liquid container and allowing a liquid suction conduit of a liquid frothing device to pass through when it is desired to retrieve liquid from the liquid container. Advantageously, the closure arrangement allows for easy insertion, proper positioning and stable support of the liquid suction conduit in the liquid container. Advantageously, the closure arrangement is of uncomplicated, robust design, easy to operate and/or easy to clean.

In view of the foregoing, the invention provides a liquid container, configured for use with a liquid frothing device including a liquid suction conduit, the liquid container comprising: a container housing having an inlet for allowing insertion of said liquid suction conduit in the container housing, and a closure arrangement comprising a seat and a closure body, wherein the seat is arranged in the inlet and has a through hole for allowing said liquid suction conduit to pass through, wherein the closure body is arranged in the seat and has a through hole for allowing said liquid suction conduit to pass through, and wherein the closure body is movable in the seat between at least two different positions, one position being an opened position in which the through hole of the closure body is aligned with the through hole of the seat, and at least one other position being a closed position in which the closure body blocks the through hole of the seat.

According to the invention, a closure arrangement of a liquid container comprises a combination of a seat and a closure body. Both the seat and the closure body have a through hole for allowing a liquid suction conduit of a liquid frothing device to pass through. The closure body is movable in the seat, wherein the closure body and the seat can be put to a mutual position in which the respective through holes are aligned and in which it is possible for the liquid suction conduit to be inserted in the container housing, through the inlet in the container housing, which is free in that situation. On the other hand, the closure body and the seat can be put to a mutual position in which the through hole of the seat is blocked by the closure body, so that the inlet of the container housing is closed in that situation. Thus, it only takes a movement of the closure body in the seat to switch between a position in which the closure arrangement is capable of allowing the liquid suction conduit to pass through and a position in which the inlet is closed by means of the closure arrangement so that any liquid as may be present inside the container housing may be preserved.

In some embodiments, the seat may be configured to block the through hole of the closure body in the closed position of the closure body, so that the through holes of both the seat and the closure body can be blocked in one go, wherein there is no need for using separate means to realize complete closure of the closure arrangement, i.e. a state of the closure arrangement in which the interior of the container housing is sealed from the outside of the container housing at the position of the inlet.

In some embodiments, the closure body may be rotatably arranged in the seat. The closure body may for instance be of cylindrical or spherical shape.

In some embodiments, the closure body may be provided with a tab. The tab may extend from the closure body to a position outside of the container housing, so as to be readily accessible by a user. By operating the tab, a user may easily change the position of the closure body in the seat.

In some embodiments, the closure body may be removable from and insertable in the seat. This is particularly advantageous in view of cleaning purposes. The seat may comprise a resilient material such as rubber. The resilient material allows for easy removal and insertion of the closure body and prevent the closure body from unintendedly falling out of the seat. The resilient material may also ensure good sealing between the closure body and the seat, which is in particular advantageous when the closure body has adopted the closed position.

In some embodiments, the liquid container may have an air inlet. Thus creation of under pressure may be prevented, by allowing air to flow into the container housing while liquid is being sucked therefrom via the liquid suction conduit. The air inlet may be included in the closure arrangement, for instance in the seat, in the closure body, and/or between the seat and the closure body. Advantageously, the air inlet may be formed such that it will be automatically opened and closed as the closure body is moved to its opened and closed position respectively. This contributes to easy, fool proof operation of the closure arrangement, with under pressure being prevented during suctioning and good closure being guaranteed afterwards, when the closure arrangement is put in its closed position.

In some embodiments, the through hole of the closure body may be shaped to contact the liquid suction conduit along part of its perimeter only. The contacting part (or parts) may help to proper position and stably support the liquid suction conduit in the liquid container, while the non-contacting part (or parts) may form air gaps, allowing the pressure in the liquid container to be equalized during suctioning as explained above. Also, by reducing the contact area between the liquid suction conduit and the closure body, movement of the liquid suction conduit through the through hole may be facilitated.

For instance, the liquid suction conduit may have a circular cross section. In such case, the through hole of the closure body may have a polygonal cross section, dimensioned to have its sides contact the outer perimeter of the liquid suction conduit. Alternatively, the through hole may be provided with inwardly protruding elements, e.g. elongated ribs extending on the surface of the closure body that delimits the through hole. The protruding elements may be arranged in a regular pattern so as to have clearly defined air channels.

Additionally or alternatively to the above-mentioned possibilities, for the purpose of allowing air to flow in the container housing when liquid is sucked out of the container housing, the container housing may have an air inlet outside of the inlet for the liquid suction conduit.

In some embodiments, the container housing may comprise a cup-shaped basic member having a bottom and a standing wall extending from the bottom, and a cover for closing the basic member, wherein the inlet and the closure arrangement are located in the cover. The cover may be coupled to the basic member, for example, in a hinging fashion. Alternatively, the cover may be removable from and connectable to the basic member, e.g. via a snap-fit connection, a bayonet-type connection or a threaded connection.

The invention also relates to a liquid frothing set, comprising: a liquid frothing device including a liquid suction conduit, and a liquid container as described and defined in the foregoing, i.e. a liquid container comprising a combination of a seat and a closure body as a closure arrangement for an inlet that is present in a container housing of the liquid container and that serves for allowing insertion of said liquid suction conduit into the container housing. The liquid frothing device may be of any type, and may be configured to froth milk, for example. In general, a liquid frothing device is designed to supply air to a quantity of liquid in such a way that froth (also referred to as foam) is formed. The liquid frothing device may be provided as a module of a larger device such as a coffee maker.

The liquid frothing device may comprise a supporting member configured to receive the liquid container and to put the liquid container in a predetermined position with respect to the liquid frothing device. Irrespective of whether or not the liquid frothing device comprises a supporting member as mentioned, the invention is advantageous in that the movable arrangement of the closure member in the seat allows for a certain flexibility in the orientation of the liquid suction conduit relative to the container housing during insertion and removal of the conduit. In other words, thanks to the movable arrangement, some play is provided for manipulating the liquid suction conduit with respect to the container housing, wherein it is not necessary for a user to be very precise when it comes to orienting the liquid suction conduit with respect to the container housing. Thus, it is easier to maneuver the liquid suction conduit, the liquid container or both into position. Ease of insertion and removal of the liquid suction conduit may even be further enhanced by the afore described aspect where the contact area between the closure body and the liquid suction conduit is reduced along the perimeter of the latter.

The movable arrangement and increased maneuverability also allow the through hole in the closure body to be of increased length, thus allowing the inserted liquid suction conduit to be supported over a longer length, which may result in a better, more stable support.

The above-described and other aspects of the invention will be apparent from and elucidated with reference to the following detailed description of an advantageous embodiment of a liquid container that is suitable for use with a liquid frothing device. The embodiment as shown and described is one of many examples existing within the framework of the invention.

### BRIEF DESCRIPTION OF THE DRAWINGS

The invention will now be explained in greater detail with reference to the figures, in which equal or similar parts are indicated by the same reference signs. In particular,
Figure 1 schematically shows a perspective view of the liquid container, the closure body being in the opened position;
Figure 2 schematically shows a sectional view of the liquid container with the closure body in the opened position;
Figure 3 is an enlarged view of a portion of figure 2;
Figure 4 schematically shows a perspective view of the liquid container, the closure body being in the opened position and a liquid suction conduit of a liquid frothing device extending through the closure body;
Figure 5 schematically shows a sectional view of the liquid container with the closure body in the opened position and the liquid suction conduit extending therethrough;
Figure 6 is an enlarged view of a portion of figure 5;
Figure 7 schematically shows a perspective view of the liquid container, the closure body being in the closed position;
Figure 8 schematically shows a sectional view of the liquid container with the closure body in the closed position;
Figure 9 is an enlarged view of a portion of figure 8;
Figure 10 schematically shows a perspective view of the liquid container, the closure body being removed from the seat; and
Figure 11 illustrates use of the liquid container with a liquid frothing device including a liquid suction conduit.

### DETAILED DESCRIPTION OF EMBODIMENTS

The invention is in the field of liquid containers for use with a liquid frothing device including a liquid suction conduit. In the following description of an advantageous embodiment of the invention as illustrated in the figures, it is assumed that the liquid container is a milk container that is designed for use with a milk frother including a milk suction conduit. In this respect, for the sake of completeness, it is noted that the features of the liquid container according to the invention are independent of the type of liquid that may be contained in the liquid container.

In general, a liquid frothing device such as a milk frother comprises a liquid suction conduit for sucking liquid to be frothed from a source of the liquid. Further, a liquid frothing device has some kind of air supply for taking in air to a space where it can be made to interact with the liquid so as to form froth. As is known per se in the art, various measures may be taken for promoting a frothing process, such as letting a jet of liquid squirt against a surface for beating air into the liquid. As the invention is not related to the design of a liquid frothing device, further details of such a device will not be explained here. The aspect of a liquid frothing device that is relevant in the context of the invention is the fact that the liquid frothing device is equipped with a mechanism for retrieving liquid from a source of the liquid, particularly with a liquid suction conduit.

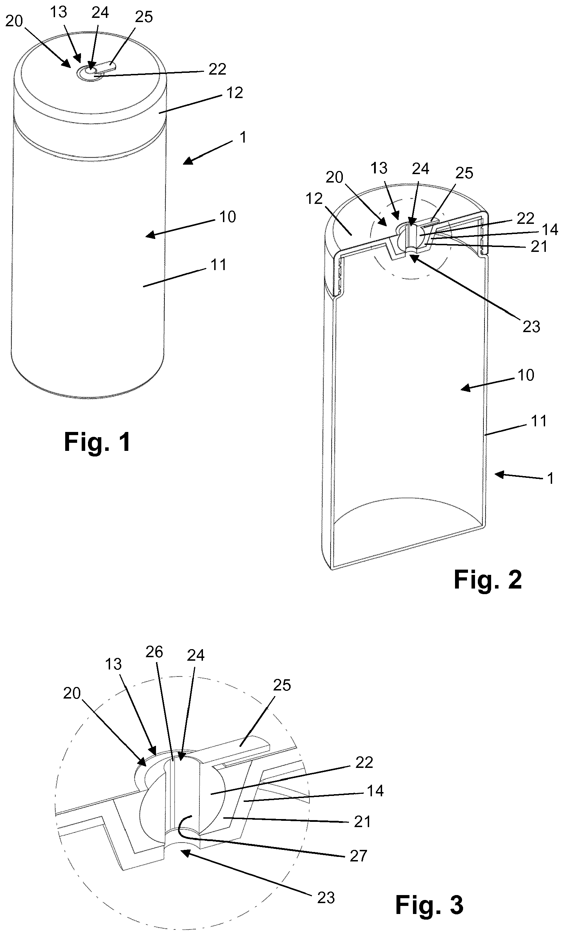

With reference to the figures, details of the invention as embodied in a milk container 1 as shown will now be explained. The milk container 1 comprises a container housing 10, i.e. an enclosure for the milk to be contained by the milk container 1. The container housing 10 comprises two parts, namely a basic member 11 and a cover 12. The basic member 11 is generally shaped like a cup having a bottom, a standing wall and an open side, wherein the cover 12 has a function in closing the open side of the basic member 11. The basic member 11 and the cover 12 are separate components which are connectable to each other by means of screw thread. Particularly, as can be seen in the sectional views of figures 2, 3, 5, 6, 8 and 9, a top portion of the basic member 11 is provided with external screw thread and the cover 12 is provided with internal screw thread. A screw thread connection is just one of many possibilities when it comes to closing the open side of the basic member 11 by means of the cover 12. Examples of another possibility include a snap connection and a twist-lock connection. Alternatively, the cover 12 may be hingeably connected to the basic member 11, or may be slideable in/on the basic member 11, for example. The invention is not restricted to any particular design of the container housing 10, and the details of the milk container 1 as described herein are not implicitly related to any particular design of the container housing 10 either.

The basic member 11 and the cover 12 may be made of any suitable materials, including plastic materials. For the sake of completeness, it is noted that the basic member 11 is shown in the figures as being transparent, whereas the cover 12 is shown in the figures as being opaque.

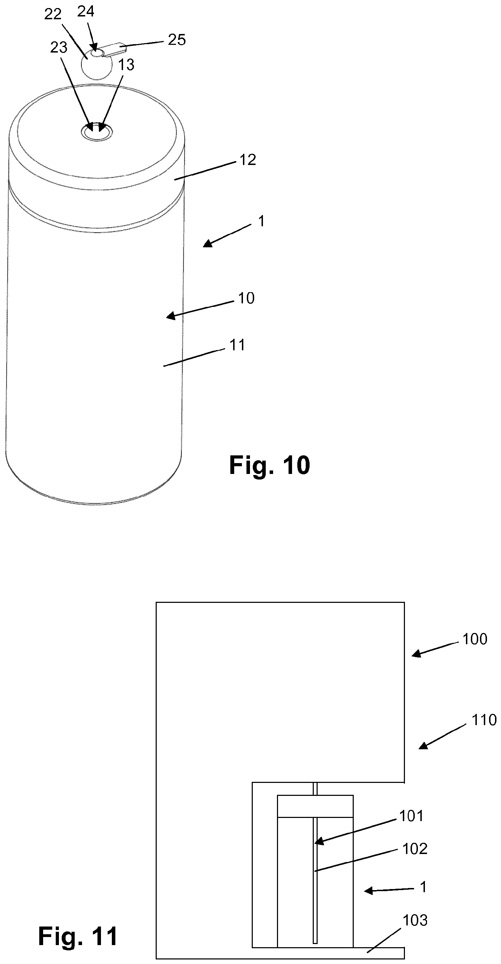

The milk container 1 may serve as a milk source for a milk frother 100 as schematically depicted in figure 11, in which a set of the milk frother 100 and the milk container 1 is indicated by reference numeral 110. The milk frother 100 includes a milk suction conduit 101 for the purpose of sucking milk from the milk container 1. In view thereof, the container housing 10 has an inlet 13 for allowing insertion of the suction conduit 101, more particularly, an end portion 102 thereof, in the container housing 10. The inlet 13 may have any suitable position in the container housing 10. In the shown example, the inlet 13 is centrally located in the cover 12. Prior to operation of the milk frother 100, a user is supposed to maneuver the milk suction conduit 101 or at least the end portion 102 thereof into the container housing 10 through the inlet 13. For the purpose of supporting the milk container 1 and also guiding a user in putting the milk container 1 in an appropriate position with respect to the milk frother 100, the milk frother 100 may comprise a supporting member 103 as schematically depicted in figure 11.

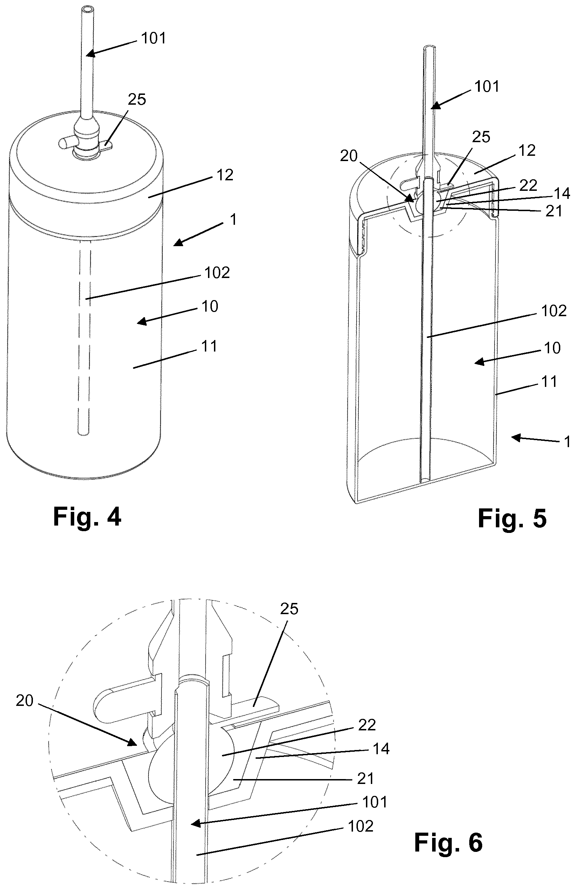

In general, the milk suction conduit 101 may be shaped like a tube or a pipe. It may have a flexible portion to enhance its maneuverability. The end portion 102 of the milk suction conduit 101 may be rigid. As illustrated in figures 5 and 6, the end portion 102 may be provided as a separate component that is coupled to the remainder of the milk suction conduit 101.

The milk container 1 is not only suitable for delivering milk to a milk frother 100 but may also serve to store the milk when not used. To that end, the milk container 1 can be placed in a fridge or another cool spot. In order to preserve the milk in the best possible way, the milk container 1 comprises a closure arrangement 20 that is located in the inlet 13, so that a fully closed condition of the container housing 10 can be realized for storage purposes. In particular, the closure arrangement 20 is designed to be capable of leaving the inlet 13 open when it is desired to have the milk suction conduit 101 inserted in the container housing 10 as well as to be capable of closing the inlet 13 when it is desired to preserve the content of the container housing 10.

In the advantageous embodiment of the milk container 1 as shown in the figures, the closure arrangement 20 comprises a seat 21 and a closure body 22, wherein the seat 21 is arranged in the inlet 13, and wherein the closure body 22 is arranged in the seat 21. As can be seen in the sectional views of figures 2, 3, 5, 6, 8 and 9, the cover 12 is designed with a holding section 14 for accommodating the closure arrangement 20 at the position of the inlet 13. The seat 21 has a through hole 23 for allowing the milk suction conduit 101 to pass through, and the closure body 22 has a through hole 24 for allowing the milk suction conduit 101 to pass through as well. The closure body 22 is of spherical shape, in other words, the closure body 22 is ball-shaped, and is rotatably arranged in the seat 21. The seat 21 is designed so as to be capable of encompassing a part of the closure body 22 and holding the closure body 22 in that way. In an alternative embodiment, the closure body 22 could be of cylindrical shape, with the seat 21 being shaped accordingly.

In the shown closure arrangement 20, it is possible to have the closure body 22 in an opened position, i.e. a position in which the through hole 24 of the closure body 22 is aligned with the through hole 23 of the seat 21. This is done when it is desired to retrieve milk from the milk container 1. On the other hand, it is possible to have the closure body 22 in a closed position, i.e. a position in which the through hole 23 of the seat 21 is blocked by the closure body 22. All that is needed to move the closure body 22 between the opened position and the closed position is rotating the closure body 22 over an angle of 90°. For the purpose of enabling a user to operate the closure body 22, a tab 25 is arranged on the closure body 22, extending from the closure body 22 at a position outside of the container housing 10. The tab 25 may be positioned on the closure body 22 in such a way that it may serve as a stop that helps a user in actually realizing the predetermined positions of the closure body 22. As mentioned, the seat 21 is designed so as to be capable of encompassing a part of the closure body 22. This is advantageously done in such a way that when the closure body 22 is in the closed position, the through hole 24 of the closure body 22 is blocked by the seat 21.

The seat 21 may comprise a resilient material. For example, the seat 21 may be made of rubber. Resilient properties of the seat 21 may help in obtaining a sealing closure of the container housing 10 in the closed position of the closure body 22. Further, resilient properties of the seat 21 may help in offering a possibility of removing the closure body 22 from the seat 21, as illustrated in figure 10. This possibility may be useful for cleaning purposes, for example. In that case, the closure body 22 can easily be removed from the seat 21, wherein the tab 25 may be used for lifting the closure body 22 from the seat 21, and can easily be snapped back in place in the seat 21 again.

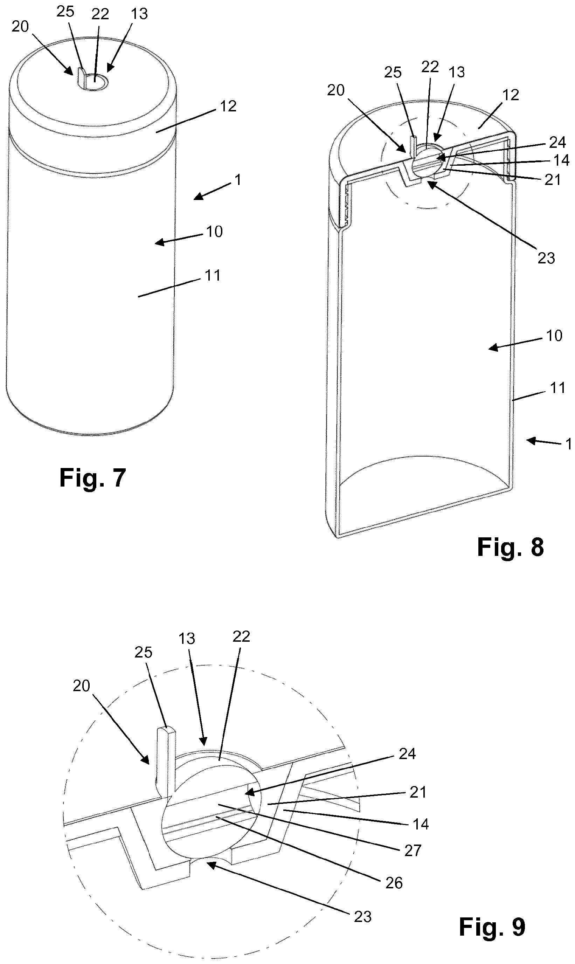

As best seen in figures 3 and 9, the closure body 22 comprises a set of ribs 26 extending on a surface 27 of the closure body 22 delimiting the through hole 24. The ribs 26 extend in the direction in which the milk suction conduit 101, 102 is moved through the through hole 24. The ribs 26 may serve to calibrate the insertion force and at the same time ensure a presence of air gaps so as to allow air to flow in the container housing during a milk sucking process. Thanks to the fact that the closure body 22 can be rotated in the seat 21, it is easy to adjust the position of the closure body 22, and in particular the orientation of the through hole 24, as may be necessary during insertion or removal of the milk suction conduit 101, 102 in, respectively from the container housing 10. The rotatable arrangement of the closure body 22 allows the closure body 22, and more particularly the through hole 24, to follow tilting movements of the milk suction conduit 101, 102, which may occur in a process of maneuvering the milk container 1 and the milk suction conduit 101, 102 in and out of place with respect to each other.

Thanks to a closure arrangement according to the invention, a user is not compelled to realize and maintain a strictly perpendicular orientation of the milk suction conduit 101, 102 relative to the cover 12 during insertion and removal of the milk suction conduit 101, 102. This advantageous effect of the invention is independent of a length along which the milk suction conduit 101 is actually encompassed in the cover 12 and thus guided. Hence, the invention offers a possibility of realizing a robust and reliable arrangement of the milk suction conduit 101 with respect to the milk container 1, without affecting ease of insertion and removal of the liquid suction conduit 101.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The term "comprise" as used in this text will be understood by a person skilled in the art as covering the term "consist of". Hence, the term "comprise" may in respect of an embodiment mean "consist of", but may in another embodiment mean "contain/include at least the defined species and optionally one or more other species".

A possible summary of the invention reads as follows. A liquid container 1 configured for use with a liquid frothing device 100 including a liquid suction conduit 101 is provided. The liquid container 1 comprises a container housing 10 having an inlet 13 and a closure arrangement 20. The closure arrangement comprises a seat 21 that is arranged in the inlet 13 and a closure body 22 that is arranged in the seat 21. Both the seat 21 and the closure body 22 have a through hole 23, 24 for allowing a liquid suction conduit 101 of a liquid frothing device 100 to pass through. The closure body 22 is movable in the seat 21 between at least an opened position in which the respective through holes 23, 24 of the seat 21 and the closure body 22 are aligned with each other, and a closed position in which the closure body 22 blocks the through hole 23 of the seat 21

## Claims

1. Liquid container (1) configured for use with a liquid frothing device (100) including a liquid suction conduit (101), the liquid container (1) comprising:
- a container housing (10) having an inlet (13) for allowing insertion of said liquid suction conduit (101) in the container housing, and
- a closure arrangement (20) comprising a seat (21) and a closure body (22),
wherein the seat (21) is arranged in the inlet (13) and has a through hole (23) for allowing the liquid suction conduit (101) to pass through, wherein the closure body (22) is arranged in the seat (21) and has a through hole (24) for allowing the liquid suction conduit (101) to pass through, and wherein the closure body (22) is movable in the seat (21) between at least two different positions, one position being an opened position in which the through hole (24) of the closure body (22) is aligned with the through hole (23) of the seat (21), and at least one other position being a closed position in which the closure body (22) blocks the through hole (23) of the seat (21).

2. Liquid container (1) according to claim 1, wherein the seat (21) is configured to block the through hole (24) of the closure body (22) in the closed position of the closure body (22).

3. Liquid container (1) according to claim 1 or 2, wherein the closure body (22) is rotatably arranged in the seat (21).

4. Liquid container (1) according to any of claims 1-3, wherein the closure body (22) is of spherical shape.

5. Liquid container (1) according to any of claims 1-4, wherein the closure body (22) comprises a tab (25) extending from the closure body (22), at a position outside of the container housing (10).

6. Liquid container (1) according to any of claims 1-5, wherein the closure body (22) is removably arranged in the seat (21).

7. Liquid container (1) according to any of claims 1-6, wherein the seat (21) comprises a resilient material.

8. Liquid container (1) according to any of claims 1-7, wherein the container housing (10) has an air inlet.

9. Liquid container (1) according to claim 8, wherein the air inlet is included in the closure arrangement (20).

10. Liquid container (1) according to any of claims 1-9, wherein the through hole (24) is shaped to contact the liquid suction conduit (101), in inserted condition, along part of its perimeter only.

11. Liquid container (1) according to any of claims 1-10, wherein the container housing (10) comprises a cup-shaped basic member (11) having a bottom and a standing wall extending from the bottom, and a cover (12) for closing the basic member (11), wherein the inlet (13) and the closure arrangement (20) are located in the cover (12).

12. Liquid container (1) according to claim 11, wherein the cover (12) is removably connectable to the basic member (11).

13. Liquid frothing set (110), comprising:
- a liquid frothing device (100) including a liquid suction conduit (101), and
- a liquid container (1) according to any of claims 1-12.

14. Liquid frothing set (110) according to claim 13, wherein the liquid frothing device (100) is part of a coffee maker.
